# EUROPEAN PATENT SPECIFICATION

(11) **EP 1 752 981 B1**
(45) Date of publication and mention of the grant of the patent: **22.10.2008**
(21) Application number: 06124174.1
(22) Date of filing: 08.07.2003
(51) Int. Cl.: G11B 11/00, G11B 9/00, G11B 9/02, G11B 9/08

(54) **Dielectric recording/reproducing head and tracking method**
Dielektrischer Aufzeichnungs-/Wiedergabekopf und Tracking-Verfahren
Tête d'enregistrement/de reproduction diélectrique et procédé de suivi

(30) Priority: 09.07.2002 JP 2002200122
(43) Date of publication of application: 14.02.2007
(62) Divisional of application: 03014597.3
(73) Proprietor: Pioneer Corporation, Meguro-ku, Tokyo (JP); Cho, Yasuo, Sendai-shi, Miyagi 980-0813 (JP)
(72) Inventor: Cho, Yasuo, Sendai-shi Miyagi 980-0813 (JP); Onoe, Atsushi, c/o Pioneer Corporation, Tsurugashima-shi Saitama (JP)
(74) Representative: Skuhra, Udo

(56) References cited:
- JP-A- 57 200 956
- US-A- 5 985 404

## Description

### BACKGROUND OF THE INVENTION

### 1. Field of the Invention

The present invention relates to a dielectric recording / reproducing head for recording data in a dielectric recording medium by changing polarization directions of a dielectric material according to the data and reproducing data recorded in the dielectric recording medium, and to a tracking method.

### 2. Description of the Related Art

JP 57-200956A (cf. the preamble of claim 1) discloses a disk 401 formed by a dielectric made of vinyl chloride or the like, and a reproducing stylus 102 made of diamond, sapphire, or the like. A first electrode 105 made of a dielectric and a second electrode 402 are provided in parallel in the advancing direction of an information track. An electrostatic capacity C1 is generated between the first electrode 105 and the second electrode 402. The value of this electrostatic capacity 404 varies depending on whether a bit 106 is present or not. A variation of the electrostatic capacity is detected by connecting the first electrode 105 and the second electrode 402 across an inductance, and forming a resonance circuit with high Q. Thus, information can be reproduced with high efficiency and little noise.

US-A-5985404 discloses a recording medium suitable for use in high density, high capacity recording systems such as computers. Recording is carried out by applying a polarization reversal of a ferroelectric material.

As high-density, large-capacity recording / reproducing apparatuses of randomly accessible type, there are known an optical disk apparatus and a hard disc drive (HDD) apparatus. Moreover, a recording / reproducing technique using a scanning nonlinear dielectric microscopy (SNDM) for the nanoscale analysis of a dielectric (ferroelectric) material has been recently proposed by the inventors of the present invention.

In the optical recording, an optical pickup with a laser as a light source is used. Data is recorded by forming pits that are concave-convex on a disk surface or forming the crystal phase of a phase shift medium. The recorded data is reproduced by using the difference in the reflectance between a crystal phase and an amorphous phase or using the magneto optical effect. However, the inertia of the pickup is relatively large, which is not appropriate for high-speed reading, and the size of the recording pit in using a focusing optical system, such as lens, is defined by the diffraction limit of light, so that its recording density is limited to 50 G bit/inch².

In the longitudinal recording of magnetic recording as represented by the HDD, a magnetic resistance (MR) head has been recently realized using giant magnetic resistance (GMR) and its recording density is expected to be larger than that of the optical disk by using perpendicular magnetic recording. However, the recording density is limited to 1 T bit/inch² due to thermal fluctuation of magnetic recording information and the presence of a Bloch wall in a portion in which a code or sign is reversed or changed, even if patterned media are used considering the above cause.

Using the SNDM to measure a non-linear dielectric constant of a ferroelectric material, it is possible to determine the plus and minus of a ferroelectric domain. Moreover, the SNDM is found to have sub-nanometer resolution using an electrically conductive cantilever which is provided with a small probe on its tip portion and which is used for an atomic force microscopy (AFM) or the like.

In the nanometer-scale analysis of the dielectric material using this SNDM, positioning is performed by controlling a piezo stage, as performed for the AFM apparatus. Moreover, using the high resolution of the SNDM, there is a possibility to realize a super-high-density recording / reproducing system with a ferroelectric substance as a medium, but in this case, it is necessary to generate and detect a control signal such as tracking signal, as performed for an optical disk apparatus and a magnetic disk apparatus.

However, the above-described SNDM has not been specially developed in view of a recording / reproducing apparatus, and there have not been presented any preferable method of and apparatus structure for generating and detecting the control signal such as tracking signal as presented for the optical disk apparatus and the magnetic disk apparatus.

### SUMMARY OF THE INVENTION

It is therefore an object of the present invention to provide a dielectric recording / reproducing head and a tracking method, which enable accurate tracking when recording or reproducing.

The above object of the present invention can be achieved by a dielectric recording / reproducing head having the features of claim 1.

If the tip portion of the recording / reproducing electrode is located exactly on or above the target track, the tip portion of the recording / reproducing electrode can cover the target track, a part of the adjacent track located on one side of the target track and a part of the adjacent track located on the other side of the target track. Therefore, not only data or information recorded on the target track, but also data or information recorded on the adjacent track(s) can be detected by the electrode at a time. The data or information recorded on the adjacent track(s) can be used for tracking control of the dielectric recording / reproducing head. The use of the data or information recorded on the adjacent track(s) makes the track control easy and accurate. Alternatively, if there is a space between the target track and the adjacent track(s), the tip portion of the recording / reproducing head can cover the target track, a part of the space located on one side of the target track and a part of the space located on the other side of the target track. Therefore, if the recording / reproducing electrode moves in the track width direction by a small amount, the position of the tip portion of the recording / reproducing electrode is still located on or above the target track, so that an on-track state (i.e. the state where the electrode correctly traces the target track) is kept. This means that tracking control becomes easy (i.e. it is possible to allow the relatively rough tracking control).

Incidentally, with respect to the shape of the recording / reproducing electrode, a pin shape or needle-shape, a cantilever-shape, and the like are known as specific structures. The electrode having these shapes is collectively referred to as the "probe" in the present application as occasion demands.

In one aspect of the dielectric recording / reproducing head of the present invention, the tip portion of the recording / reproducing electrode has the first width in a longitudinal direction and a second width in a cross direction. The first width is larger than the second width. For example, the shape of the cross-section of the tip portion of the recording / reproducing electrode is formed in the shape of an ellipse or rectangle. According to this aspect, the above-mentioned easy and accurate tracking control can be achieved.

The slider is placed on the surrounding of the recording/reproducing electrode. The slider protects the recording / reproducing electrode and keeps a constant distance between the probe and the dielectric recording medium.

In one aspect of the dielectric recording / reproducing head of the present invention, the recording / reproducing electrode has a cantilever shape.

According to this aspect, the probe has a cantilever shape, giving excellent flexibility as a probe.

In another aspect of the dielectric recording / reproducing head of the present invention, the slider contains a conductive member and has a function of a return electrode for returning an electric field applied from the recording / reproducing electrode to the dielectric recording medium.

According to this aspect, the slider can functions as a return electrode for returning a high frequency electric field applied from the probe when reproducing data recorded in the dielectric recording medium. Especially, if the SNDM technique is used for reproducing information or data recorded in the dielectric (ferroelectric) recording medium, the return electrode is needed, and it is placed near the recording / reproducing electrode in order to reduce noises. In the SNDM, in order to detect the capacitance corresponding to a nonlinear dielectric constant located just under the tip portion of the recording / reproducing electrode, the frequency modulation is used. To this end, the very compact high-frequency oscillation circuit is needed. This oscillation circuit is constructed of an oscillator and a resonance circuit and other necessary electric elements. Further, the resonance circuit is constructed of an inductor and a capacitance of the dielectric (ferroelectric) material of the dielectric (ferroelectric) recording medium located just under the recording / reproducing electrode, for example. The oscillation frequency of the oscillation circuit is determined by the inductance of the inductor and the capacitance of the dielectric (ferroelectric) material. In order to work this oscillation circuit, it is needed to apply a high-frequency signal to the dielectric (ferroelectric) material though the recording / reproducing electrode, generate a high-frequency electric field in the dielectric (ferroelectric) material, and return the high-frequency signal as a feedback in the oscillation circuit. To this end, a route through which the high-frequency signal returns is needed, and further, it is preferable that this route is very short in order to reduce noises. Therefore, it is preferable that the return electrode is placed near the recording / reproducing electrode. According to this aspect of the present invention, the slider, which is located near the recording / reproducing electrode, has the function of the return electrode. Therefore, the very short route for returning the high-frequency signal can be formed, and the noises can be reduced.

In another aspect of the dielectric recording / reproducing head of the present invention, the slider contains an insulating member and has a conductive film on the surface of the slider facing to the dielectric recording medium, and the conductive film has a function of the return electrode.

According to this aspect, the conductive film for the return electrode is placed on the surface of the slider, which contains an insulating member, facing to the dielectric recording medium.

In another aspect of the dielectric recording / reproducing head of the present invention, an end portion of the slider located against a direction in which the dielectric recording medium relatively moves has a curved or sloping surface with respect to a surface of the dielectric recording medium.

According to this aspect, the movement of the dielectric recording medium causes flows of air. The air mainly flows in the direction of movement of the dielectric recording medium, and hits the end portion of the slider. At this time, the air is adjusted by the curved or sloping surface of the end portion of the slider. Therefore, it is possible to stabilize the posture of the slider.

The tip portion of the recording / reproducing electrode is constructed not to project from the surface of the slider facing to the dielectric recording medium.

According to this aspect, the probe is set not to project from the surface of the slider facing to the dielectric recording medium. Due to this setting, it is possible to prevent the destruction of the probe and the damage to the dielectric recording medium caused by the probe crashing the dielectric recording medium.

In another aspect of the dielectric recording / reproducing head of the present invention, a first width of the tip portion of the recording / reproducing electrode is larger than the width of the track of the dielectric recording medium. For example, the shape of the cross-section of the tip portion of the recording / reproducing electrode may be formed in the shape of an ellipse or rectangle.

According to this aspect, as mentioned above, easy and accurate tracking control can be achieved.

In another aspect of the dielectric recording / reproducing head of the present invention, the head is provided with a first tracking signal detection electrode for detecting a tracking signal.

According to this aspect, the electrode only for tracking error detection is provided. This electrode allows the tracking error detection with a good accuracy.

In another aspect of the dielectric recording / reproducing head of the present invention, the first tracking signal detection electrode is placed in front of or behind the recording / reproducing electrode, deviating by half a track pitch in one direction along a track width direction.

According to this aspect, the electrode only for tracking error detection is placed bridging adjacent two tracks, so that tracking error is detected from a signal obtained from the two adjacent tracks, for example, a target track and a track adjacent to the target track. Therefore, easy and accurate tracking control can be achieved on the basis of this tracking error detection.

In another aspect of the dielectric recording / reproducing head of the present invention, the head is further provided with a second tracking signal detection electrode for detecting a tracking signal. The second tracking signal detection electrode is placed in front of or behind the recording / reproducing electrode, deviating by half a track pitch in the opposite direction to said one direction.

According to this aspect, the head has the two electrodes only for tracking error detection. The first tracking signal detection electrode is placed at a portion deviating from the position of the recording / reproducing electrode by half a track pitch in one direction. The second tracking signal detection electrode is placed at a portion deviating from the position of the recording / reproducing electrode by half a track pitch in the opposite direction. The first tracking signal detection electrode can detect not only information or data recorded on the target track but also information or data recorded on the track adjacent to the target track in one direction. The second tracking signal detection electrode can detect not only information or data recorded on the target track but also information or data recorded on the track adjacent to the target track in the opposite direction. Based on these information or data, the amount of tracking error and the direction of tracking error are determined. Therefore, easy and accurate tracking control can be done on the basis of the tracking error detections.

In another aspect of the dielectric recording / reproducing head of the present invention, an insulator is placed between the slider and the recording / reproducing electrode.

According to this aspect, the inside of the slider is filled with an insulator, which can fix the probe for recording / reproducing and the electrode for tracking error detection. It is preferable that the insulator is a molding member for holding the probe in the inside of the slider. By the molding member, the position of the probe is fixed.

The nature, utility, and further features of this invention will be more clearly apparent from the following detailed description with reference to preferred embodiments of the invention when read in conjunction with the accompanying drawings briefly described below.

### BRIEF DESCRIPTION OF THE DRAWINGS

FIG. 1A is a plan view showing a first embodiment of a dielectric recording / reproducing head associated with the present invention;
FIG. 1B is an A1-A1 cross sectional view of FIG. 1A;
FIG. 2A is a plan view showing a second embodiment of the dielectric recording / reproducing head associated with the present invention;
FIG. 2B is an A2-A2 cross sectional view of FIG. 2A;
FIG. 3A is a plan view showing a third embodiment of the dielectric recording / reproducing head associated with the present invention;
FIG. 3B is an A3-A3 cross sectional view of FIG. 3A;
FIG. 4A is a plan view showing a fourth embodiment of the dielectric recording / reproducing head associated with the present invention;
FIG. 4B is an A4-A4 cross sectional view of FIG. 4A;
FIG. 5A is a plan view showing a fifth embodiment of the dielectric recording / reproducing head associated with the present invention;
FIG. 5B is an A5-A5 cross sectional view of FIG. 5A;
FIG. 6A is a plan view showing a sixth embodiment of the dielectric recording / reproducing head associated with the present invention;
FIG. 6B is an A6-A6 cross sectional view of FIG. 6A;
FIG. 7A is a plan view showing an example of a ferroelectric recording medium;
FIG. 7B is an A7-A7 cross sectional view of FIG. 7A;
FIG. 8 is a schematic diagram to explain information recording/ reproducing with respect to a ferroelectric substance;
FIG. 9 is a schematic diagram showing a track structure example of the ferroelectric recording medium;
FIG. 10 is a schematic diagram showing the phase image and the amplitude image of the ferroelectric recording medium depending on the tracking state of a recording / reproducing head;
FIG. 11A to FIG. 11E are schematic diagrams showing one example of a tracking signal;
FIG. 12 is a schematic diagram showing one example of a detection circuit for detecting the tracking signal; and
FIG. 13 is a block diagram showing a block structure associated with recording / reproducing signal processing of a dielectric recording / reproducing apparatus.

### DETAILED DESCRIPTION OF THE PREFERRED EMBODIMENTS

### (Embodiments of Dielectric Recording / Reproducing Head)

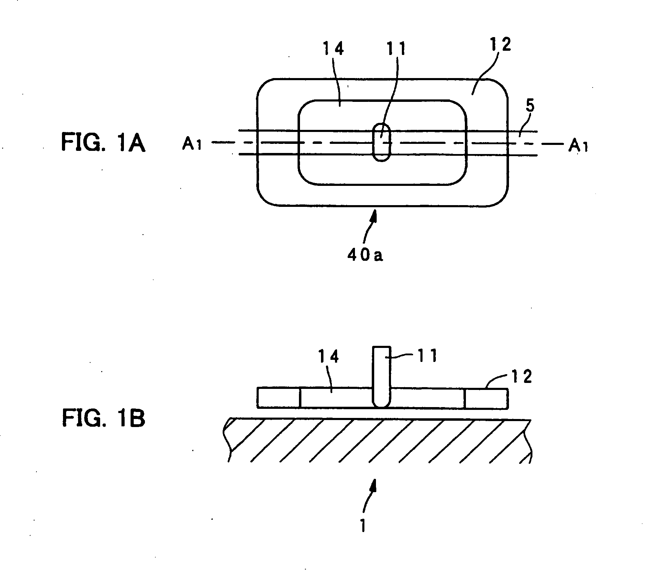

The embodiments of a dielectric recording / reproducing head associated with the present invention will be explained with reference to FIG. 1 to FIG. 6.

### (First Embodiment)

FIG. 1A is a plan view showing the first embodiment. FIG. 1B is an A1-A1 cross sectional view of FIG. 1A. As shown in FIG. 1A and FIG. 1B, a dielectric recording / reproducing head 40a is provided with: a probe 11 for recording / reproducing data in / from a ferroelectric recording medium 1; and a slider 12 placed so as to surround the probe 11 and containing an electric conductor. The head 40a may be further provided with a probe supporting device 14 containing an insulating member such as resin materials in the gap between the probe 11 and the slider 12.

The probe 11 has a longitudinal shape with a longer length in the width direction of the track 5, and covers the track 5 and one portion of adjacent spaces. Therefore, if tracking error is small, the probe 11 is not off the track 5, so that it is possible to reproduce a signal with a good signal to noise (S / N) ratio. If the tracks 5 are placed adjacently, the signal component of the adjacent tracks can be sensitively detected as a tracking error signal. The direction of tracking error can be determined by using wobbling technique, for example.

The slider 12 can be used, by earthing it, as a return electrode for returning a high-frequency electric field applied from the probe 11 to the ferroelectric recording medium 1 in order to reproduce a signal.

Moreover, the probe 11 is set not to project from a surface of the slider 12 facing to the ferroelectric recording medium 1. Due to this setting, it is possible to prevent the destruction of the probe 11 and the damage to the ferroelectric recording medium 1 caused by the probe 11 touching the ferroelectric recording medium 1.

The probe supporting device 14 is, for example, a resin molding member. The probe supporting device 14 holds the probe 11 therein and fixes the position of the probe 11 in the inside of the slider 12. Therefore, the position of the tip of the probe 11 is firmly fixed, so that accuracy of the data recording and the data reading can be improved.

### (Second Embodiment)

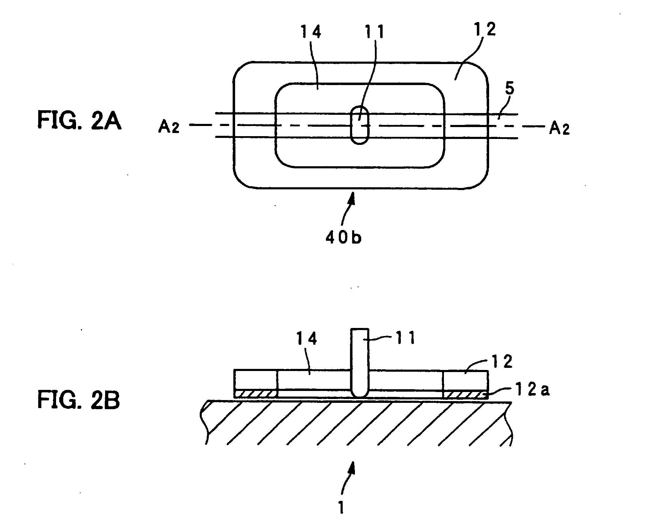

FIG. 2A is a plan view showing the second embodiment. FIG. 2B is an A2-A2 cross sectional view of FIG. 2A. As shown in FIG. 2A and FIG. 2B, a dielectric recording / reproducing head 40b is provided with: the probe 11 for recording / reproducing data in / from the ferroelectric recording medium 1; and the slider 12 placed so as to surround the probe 11 and containing an insulator. The head 40b may be further provided with the probe supporting device 14 containing an insulating member such as resin materials in the gap between the probe 11 and the slider 12. Moreover, it is provided with a conductive film 12a on a surface of the slider 12 facing to the ferroelectric recording medium 1. The slider 12 and the probe supporting device 14 may be formed in one piece.

The probe 11 has a longitudinal shape with a longer length in the width direction of the track 5, and covers the track 5 and one portion of adjacent spaces. Therefore, if tracking error is small, the probe 11 is not off the track 5, so that it is possible to reproduce a signal with a good S / N ratio. If the tracks 5 are placed adjacently, the signal component of the adjacent tracks can be sensitively detected as a tracking error signal. The direction of tracking error can be detemined by using wobbling technique, for example.

The conductive film 12a can be used, by earthing it, as a return electrode for returning a high-frequency electric field applied from the probe 11 to the ferroelectric recording medium 1 in order to reproduce a signal.

Moreover, the probe 11 is set not to project from a surface of the conductive film 12a facing to the ferroelectric recording medium 1. Due to this setting, it is possible to prevent the destruction of the probe 11 and the damage to the ferroelectric recording medium 1 caused by the probe 11 touching the ferroelectric recording medium 1.

### (Third Embodiment)

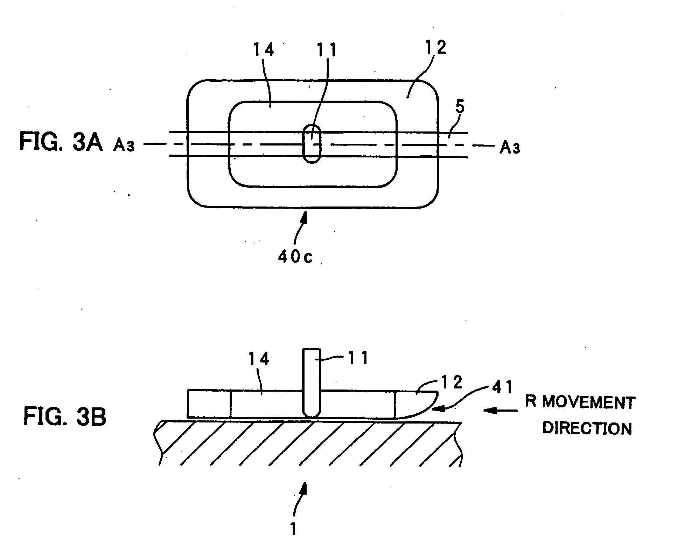

FIG. 3A is a plan view showing the third embodiment. FIG. 3B is an A3-A3 cross sectional view of FIG. 3A. As shown in FIG. 3A and FIG. 3B, a dielectric recording / reproducing head 40c is provided with: the probe 11 for recording / reproducing data in / from the ferroelectric recording medium 1; and the slider 12 placed so as to surround the probe 11. The head 40c may be further provided with the probe supporting device 14 containing an insulating member such as resin materials in the gap between the probe 11 and the slider 12.

An end surface 41 of the slider 12, which is located against the direction that the ferroelectric recording medium 1 relatively moves, i.e. the direction shown with an arrow R, is an inclined plane, which adjusts air flows generated by the movement of the ferroelectric recording medium 1 and which stabilizes the posture of the slider 12.

The slider 12 can be used, by containing an electric conductor and earthing it, as a return electrode for returning a high-frequency electric field applied from the probe 11 to the ferroelectric recording medium 1 in order to reproduce a signal. Moreover, if the slider 12 and the probe supporting device 14 are formed in one piece using an insulating member and a conductive film is provided on a surface of the slider 12 facing to the ferroelectric recording medium 1, this conductive film can be used, by earthing it, as the return electrode.

The probe 11 has a longitudinal shape with a longer length in the width direction of the track 5, and covers the track 5 and one portion of adjacent spaces. Therefore, if tracking error is small, the probe 11 is not off the track 5, so that it is possible to reproduce a signal with a good S / N ratio. If the tracks 5 are placed adjacently, the signal component of the adjacent tracks can be sensitively detected as a tracking error signal. The direction of tracking error can be determined by using wobbling technique, for example.

Moreover, the probe 11 is set not to project from a surface of the slider 12 facing to the ferroelectric recording medium 1. Due to this setting, it is possible to prevent the destruction of the probe 11 and the damage to the ferroelectric recording medium 1 caused by the probe 11 touching the ferroelectric recording medium 1.

### (Fourth Embodiment)

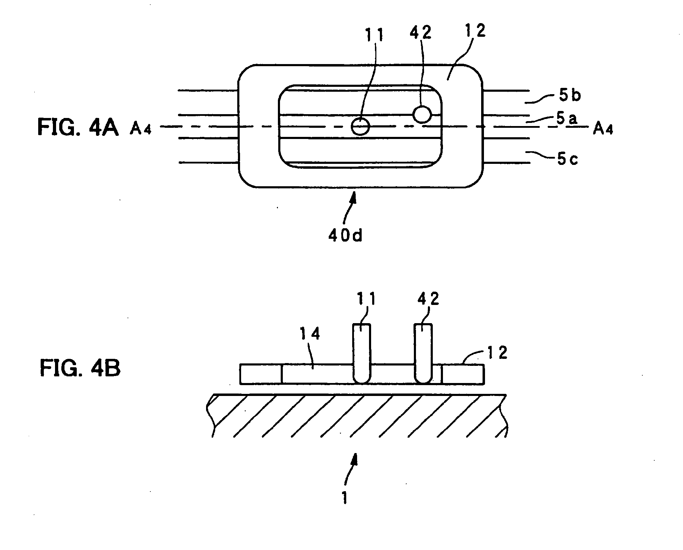

FIG. 4A is a plan view showing the fourth embodiment. FIG. 4B is an A4-A4 cross sectional view of FIG. 4A. As shown in FIG. 4A and FIG. 4B, a dielectric recording / reproducing head 40d is provided with: the probe 11 for recording / reproducing data in / from the ferroelectric recording medium 1; a tracking error detection electrode 42 placed bridging adjacent tracks 5a and 5b; and the slider 12 placed so as to surround the probe 11 and the tracking error detection electrode 42. The head 40d may be further provided with the probe supporting device 14 containing an insulating member such as resin materials in the gap among the probe 11, the tracking error detection electrode 42, and the slider 12.

The slider 12 can be used, by containing an electric conductor and earthing it, as a return electrode for returning a high-frequency electric field applied from the probe 11 to the ferroelectric recording medium 1 in order to reproduce a signal. Moreover, if the slider 12 and the probe supporting device 14 are formed in one piece using an insulating member and a conductive film is provided on a surface of the slider 12 facing to the ferroelectric recording medium 1, this conductive film can be used, by earthing it, as the return electrode.

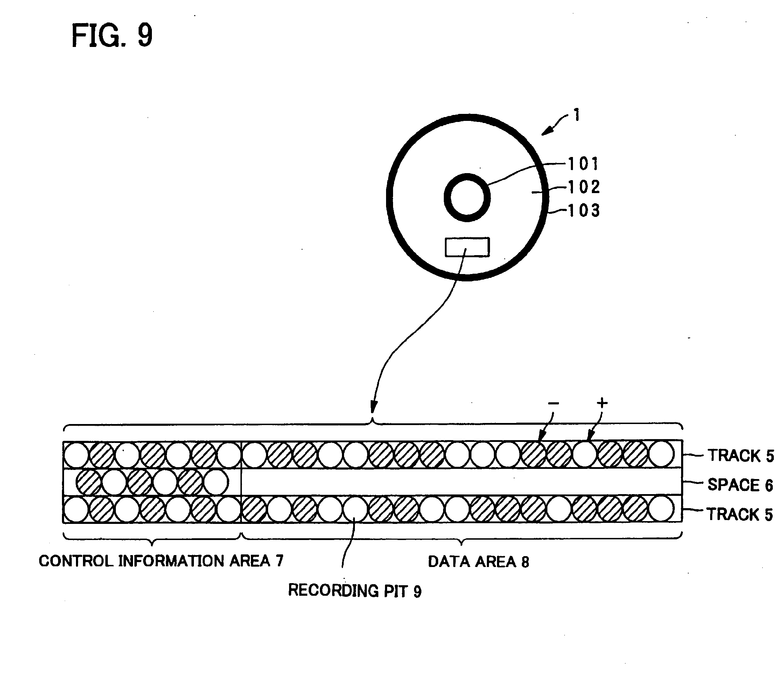

Using the tracking error detection electrode 42 placed bridging the adjacent tracks 5a and 5b, the amount of tracking error and the direction of error can be detected from signal components of the tracks 5a and 5b. For example, forming pits in a control information area 7 (shown in FIG. 9) according to a predetermined rule, the detection of these can be performed.

Moreover, the probe 11 is set not to project from a surface of the slider 12 facing to the ferroelectric recording medium 1. Due to this setting, it is possible to prevent the destruction of the probe 11 and the damage to the ferroelectric recording medium 1 caused by the probe 11 touching the ferroelectric recording medium 1.

### (Fifth Embodiment)

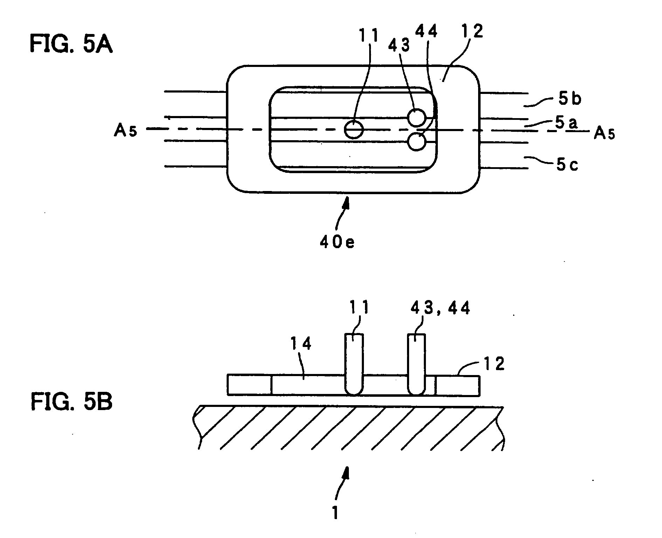

FIG. 5A is a plan view showing the fifth embodiment. FIG. 5B is an A5-A5 cross sectional view of FIG. 5A. As shown in FIG. 5A and FIG. 5B, a dielectric recording / reproducing head 40e is provided with: the probe 11 for recording / reproducing data in / from the ferroelectric recording medium 1; a tracking error detection electrode 43 placed in front of the probe 11, bridging adjacent tracks 5a and 5b; a tracking error detection electrode 44 placed in front of the probe 11, bridging adjacent tracks 5a and 5c; and the slider 12 placed so as to surround the probe 11 and the tracking error detection electrodes 43 and 44. The head 40e may be provided with the probe supporting device 14 containing an insulating member such as resin materials in the gap among the probe 11, the tracking error detection electrodes 43 and 44, and the slider 12.

The slider 12 can be used, by containing an electric conductor and earthing it, as a return electrode for returning a high-frequency electric field applied from the probe 11 to the ferroelectric recording medium 1 in order to reproduce a signal. Moreover, if the slider 12 and the probe supporting device 14 are formed in one piece using an insulating member and a conductive film is provided on a surface of the slider 12 facing to the ferroelectric recording medium 1, this conductive film can be used, by earthing it, as a return electrode for returning a high-frequency electric field applied from the probe 11 to the ferroelectric recording medium 1 in order to reproduce a signal.

Using the tracking error detection electrode 43 placed bridging the adjacent tracks 5a and 5b, a tracking error signal can be detected from signal components of the tracks 5a and 5b. Moreover, using the tracking error detection electrode 44 placed bridging the adjacent tracks 5a and 5c, a tracking error signal can be detected from signal components of the tracks 5a and 5c. The tracking error detection electrodes 43 and 44 are placed correspondingly to the inner and outer sides of the track 5a, so that the amount of tracking error and the direction of error can be detected by comparing their outputs.

Moreover, the probe 11 is set not to project from a surface of the slider 12 facing to the ferroelectric recording medium 1. Due to this setting, it is possible to prevent the destruction of the probe 11 and the damage to the ferroelectric recording medium 1 caused by the probe 11 touching the ferroelectric recording medium 1.

### (Sixth Embodiment)

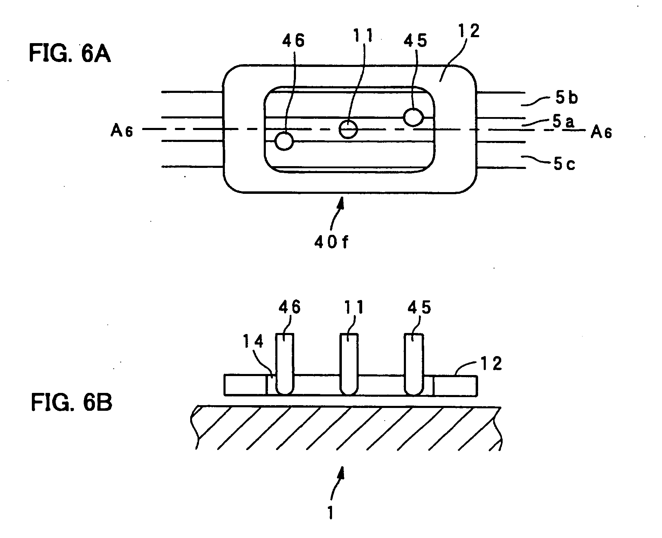

FIG. 6A is a plan view showing the sixth embodiment. FIG. 6B is an A6-A6 cross sectional view of FIG. 6A. As shown in FIG. 6A and FIG. 6B, a dielectric recording / reproducing head 40f is provided with: the probe 11 for recording / reproducing data in / from the ferroelectric recording medium 1; a tracking error detection electrode 45 placed bridging adjacent tracks 5a and 5b; a tracking error detection electrode 46 placed bridging adjacent tracks 5a and 5c; and the slider 12 placed so as to surround the probe 11 and the tracking error detection electrodes 45 and 46. The head 40f may be further provided with the probe supporting device 14 containing an insulating member such as resin materials in the gap among the probe 11, the tracking error detection electrodes 45 and 46, and the slider 12.

The slider 12 can be used, by containing an electric conductor and earthing it, as a return electrode for returning a high-frequency electric field applied from the probe 11 to the ferroelectric recording medium 1 in order to reproduce a signal. Moreover, if the slider 12 and the probe supporting device 14 are formed in one piece using an insulating member and a conductive film is provided on a surface of the slider 12 facing to the ferroelectric recording medium 1, this conductive film can be used, by earthing it, as a return electrode for returning a high-frequency electric field applied from the probe 11 to the ferroelectric recording medium 1 in order to reproduce a signal.

Using the tracking error detection electrode 45 placed in front of the probe 11, bridging the adjacent tracks 5a and 5b, a tracking error signal can be detected from signal components of the tracks 5a and 5b. Moreover, using the tracking error detection electrode 46 placed behind the probe 11, bridging the adjacent tracks 5a and 5c, a tracking error signal can be detected from signal components of the tracks 5a and 5c. The tracking error detection electrodes 45 and 46 are placed correspondingly to the inner and outer sides of the track 5a, so that the amount of tracking error and the direction of error can be detected by comparing their outputs.

The tracking error detection electrodes 45 and 46 are placed in front of and behind the probe 11, respectively, so that even if the track pitch are different from the pitch between the electrodes 45 and 46, it is possible to match the pitches by rotating the head 40f while setting the position of the probe 11 as the axis.

Moreover, the probe 11 is set not to project from a surface of the slider 12 facing to the ferroelectric recording medium 1. Due to this setting, it is possible to prevent the destruction of the probe 11 and the damage to the ferroelectric recording medium 1 caused by the probe 11 touching the ferroelectric recording medium 1.

The slider 12 in the above-described each embodiment may be provided with an appropriate groove or concave formed on its surface facing to the ferroelectric recording medium 1. The groove of this kind, for example, allows more proper control of a space between the slider 12 and the ferroelectric recording medium 1.

### (Embodiment of Dielectric Recording Medium)

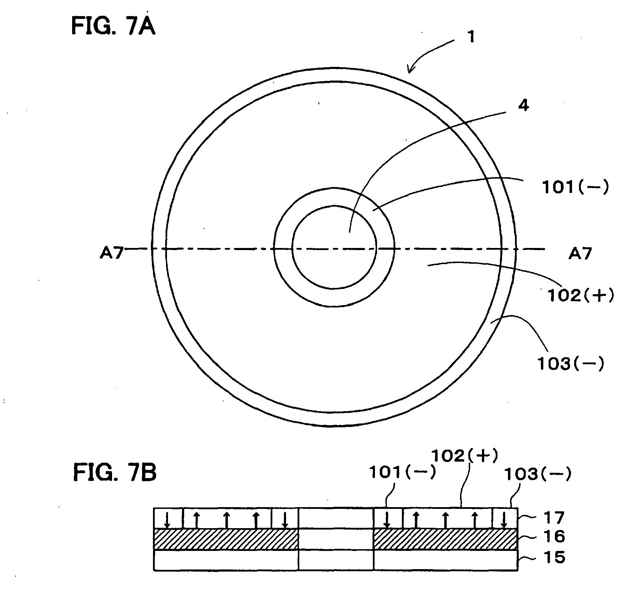

Explaining one example of the ferroelectric recording medium in which recording / reproducing is performed using the dielectric recording / reproducing head of the present invention, as shown in FIG. 7A, the ferroelectric recording medium 1 in a disc form is provided with: a center hole 4; an inner area 101; a recording area 102; and an outer area 103, arranged concentrically from the inside in this order. The center hole 4 is used when the medium is mounted on a spindle motor or the like.

The inner area 101, the recording area 102, and the outer area 103 contain a uniform and flat ferroelectric material. If the recording area 102 has an up polarization direction, i.e. being a plus surface, the inner area 101 and the outer area 103 have down polarization directions, i.e. being polarized into a minus surface in advance.

The recording area 102 is an area for recording data therein. The tracks and spaces are formed in the recording area 102. Each space is located between two of the tracks. At several or many portions on the tracks or spaces, areas in which control information about the recording / reproducing is recorded are formed. The inner area 101 and the outer area 103 are used to recognize the inner and outer positions of the ferroelectric recording medium 1 and can be also used as an area in which information about recording data, such as title, its address, recording time, and recording capacity, is recorded.

As shown in FIG. 7B, the ferroelectric recording medium 1 is provided with: a substrate 15; an electrode 16 laminated on the substrate 15; and a ferroelectric material 17 laminated on the electrode 16. The inner area 101, the recording area 102 and the outer area 103 are independently polarized in the directions shown with arrows.

The substrate 15 may be Si, for example, which is a preferable material due to its strength, chemical stability, workability, and the like. The electrode 16 is intended to generate an electric field between the electrode 16 and the probe of a recording / reproducing head and applies to the ferroelectric material 17 an electric field stronger than its coercive electric field to determine the polarization direction. Data is recorded by determining the polarization direction correspondingly to the data. Incidentally, the probe is an electrode, which is provided for the recording / reproducing head, for applying an electric field to the ferroelectric material 17, and a pin shape or needle-shape, a cantilever-shape and the like are known as its specific structures. The probe used here functions as an electrode for recording / reproducing data in / from the ferroelectric recording medium, and any shaped probe, even other than the pin shape and the cantilever shape, e.g. a thin film electrode, can be used.

As the ferroelectric material 17, LiTaO₃ may be used, for example. The recording is performed with respect to the Z surface of the LiTaO₃, where a plus surface and a minus surface of the polarization are in a 180-degree domain relationship. Alternatively, other ferroelectric materials may be used.

Moreover, the ferroelectric recording medium of the present invention may have only the recording area 102. It is also possible to divide the recording area 102 of the ferroelectric recording medium 1 into a plurality of concentric areas. In this case, a separation zone is placed between the divided recording areas adjacent to each other, and the polarization direction in the separation zone is set in the opposite direction to that in each divided recording area (e.g. it is set in the same direction as that in the inner area 101 and the outer area 103. Incidentally, the ferroelectric recording medium is not limited to the above-described disc formed medium, but may be available to a medium provided with linear tracks, for example.

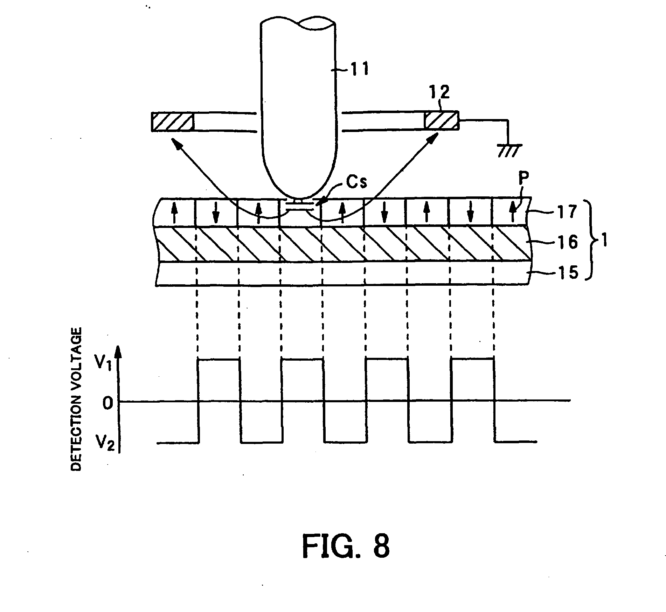

Next, the recording / reproducing principle of the above-described ferroelectric recording medium 1 will be explained with reference to FIG. 8. A ferroelectric recording medium 1 is provided with: the substrate 15; the electrode 16 placed on the substrate 15; and the ferroelectric material 17 placed on the electrode 16. Data is recorded in the ferroelectric material 17 as it polarization directions P.

When an electric field stronger than the coercive electric field of the ferroelectric material 17 is applied between a probe 11 and the electrode 16, the ferroelectric material 17 is polarized in a direction corresponding to the direction of the applied electric field. The polarization direction corresponds to the data. A return electrode 12b is an electrode for returning a high-frequency electric field applied to the ferroelectric material 17 from the probe 11 so as to reproduce recorded data and is placed so as to surround the probe 11. Incidentally, the return electrode 12b may be in any form if shaped and placed to allow the return of the electric field from the probe 11 without resistance.

Next, an example of the tracks provided in the recording area 102 of the ferroelectric recording medium 1 described above will be explained with reference to FIG. 9. Tracks 5 and spaces 6 are alternately placed concentrically or spirally. At several or many portions on each track, control information areas 7 and data areas 8 are formed. The control information areas 7 may be formed in the spaces 6. In the track 5 and the space 6 in their initial state, polarization directions are set in up direction and their surface is positive. Further, when data is recorded in such a condition that a data bit "1" corresponds to the positive direction of the polarization, and a data bit "0" corresponds to the negative direction of the polarization. Therefore, the data bit "0" is recorded by applying an electric field in the negative direction stronger than the coercive electric field, while the data bit "1" is recorded by performing no modification. Alternatively, the polarization directions for the data bit "1" and the data bit "0" may be opposite.

In the control information area 7, there are recorded information about tracking, information about track access, information about a relative movement rate between the probe and the ferroelectric recording medium 1 and the like. It is also possible to provide a plurality of control information areas 7 on the same circle.

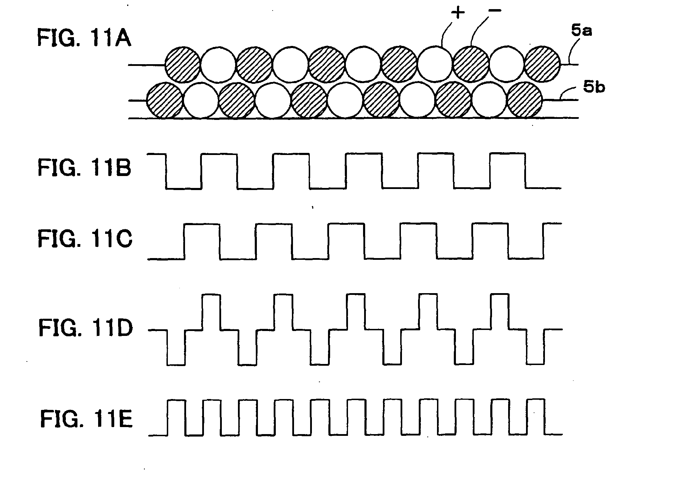

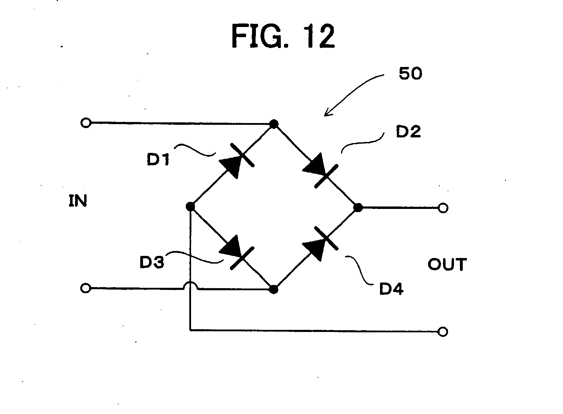

Especially, in one example of the information about tracking, as shown in the control information areas 7 in FIG. 9, signal lines in which pits having plus surfaces and minus surfaces are alternately placed are arranged with the phase of pit lines shifted at an angle of 90 degrees in the track 5 and space 6 adjacent to each other. The ferroelectric recording medium in a format having only the tracks 5 has the same arrangement between the adjacent tracks 5. Since the probe 11 traces the control information area 7 having this type of signal arrangement, a recording frequency component twice as high (or a double recording frequency component) is outputted when deviating from the target track. Detecting the size of this frequency component and the track deviation direction, it is possible to perform tracking control. This will be explained in detail later with reference to FIGs. 11 and FIG. 12.

### (Embodiment about Tracking Method)

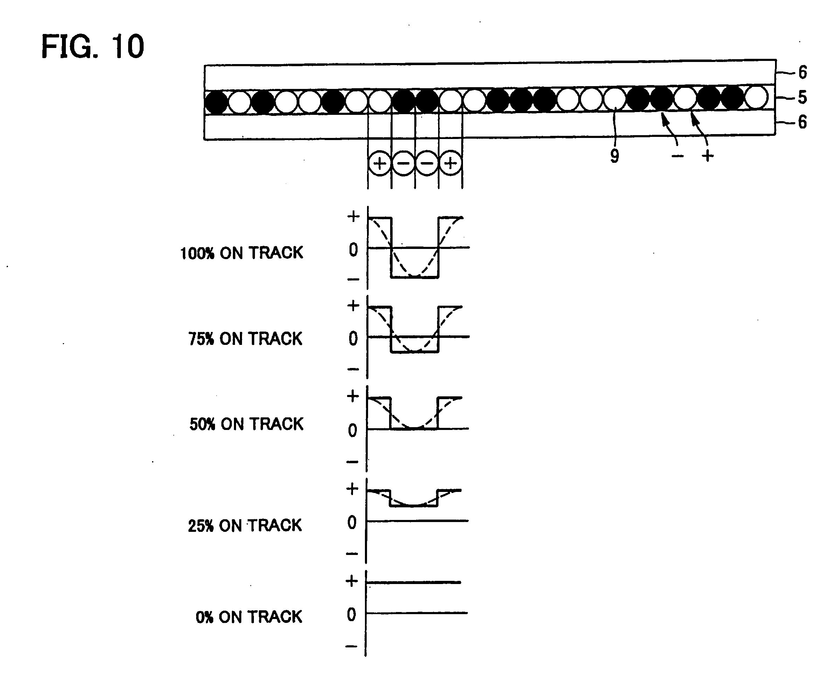

Next, one example of tracking control will be explained with reference to FIG. 10 to FIG. 12.

FIG. 10 is a schematic diagram showing the phase image and the amplitude image depending on the tracking state of the recording / reproducing head, in which the spaces 6 are provided on the both side of the track 5, sandwiching it. The spaces 6 are polarized in the positive direction, and the track 5 has pits 9 polarized in the positive direction correspondingly to data bits "1" and pits 9 polarized in the negative direction correspondingly to data bits "0". The graphs show the phase image and the amplitude image in a portion with data arranged in the order of plus, minus, minus and plus. Although the respective five graphs show the phase image and the amplitude image in the same portion, "ON track" state is different in each graph. "On track" state means a state in which the probe follows the track without being off the track or out of position. When the positional relationship between the probe and the track maintains exactly, "On track" state is 100%. In five graphs in FIG. 5, the "ON track" state of the probe 11 is 100%, 75%, 50%, 25% and 0% from the top. The solid line shows the phase image, and the dotted line shows the amplitude image. The output of the phase image is very sharp, so that the phase image can be preferably used for the tracking control. The phase image shows the signal component of phase information in a reproduction signal reproduced by the SNDM. This corresponds to the plus and minus of the polarization direction corresponding to recorded data. The amplitude image shows a signal including not only a phase component but also an intensity component in the reproduction signal reproduced by the SNDM, and the latter is closer to the raw data of the reproduction signal.

Next, the detection of tracking error will be explained in the case of alternately placing pits having plus surfaces and minus surfaces in the adjacent tracks 5, or in the tracks 5 and the spaces 6, with the phase of pit lines shifted at an angle of 90 degrees. FIG. 11A shows that pits for detecting tracking error are provided in the control information areas 7 of the adjacent tracks 5a and 5b. The pits having plus surfaces and minus surfaces are alternately placed with the phase of pit lines shifted at an angle of 90 degrees between tracks 5a and 5b. Information about these is recorded in the control information area 7 of the ferroelectric recording medium 1, for example.

FIG. 11B shows an output waveform of the track 5a, and FIG. 11C shows an output waveform of the track 5b. As compared with these two waveforms, their phases are shifted at an angle of 90 degrees. Assuming that the probe 11 deviates from the track and traces between the tracks 5a and 5b, the output obtained is as shown in FIG. 11D. From this signal, a double frequency output can be obtained, as shown in FIG. 11E, by a diode bridge circuit 50 in FIG. 12. Tracking control is performed on the basis of this double frequency output. Incidentally, the direction of tracking error can be detected by wobbling which is the same technique as that used for an optical disk or the like, for example.

As shown in FIG. 12, the diode bridge circuit 50 has diodes D1 to D4 connected to a bridge, forming a so-called rectifier circuit. The signal shown in FIG. 11D is inputted between the connection point of the diodes D1 and D2 and the connection point of the diodes D3 and D4, and the signal shown in FIG. 11E is outputted from between the connection point of the diodes D1 and D3 and the connection point of the diodes D2 and D4.

Other than the above-explained tracking method, it is also possible to use a method of performing tracking control on the basis of an output from an electrode provided only for detecting tracking error, and wobbling technique generally used for an optical disk.

### (Structure Example of Dielectric Recording / Reproducing Apparatus to which Dielectric Recording / Reproducing Head and Tracking Method are applied)

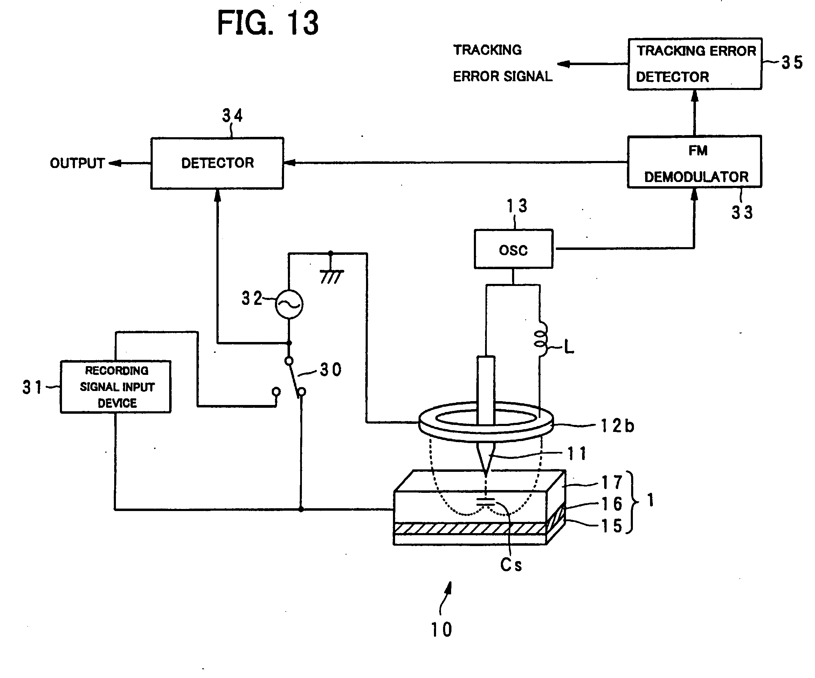

One example of a dielectric recording / reproducing apparatus to which the dielectric recording / reproducing head and the tracking method associated with the present invention are applied will be explained with reference to FIG. 13. Incidentally, a recording / reproducing apparatus using a ferroelectric recording medium provided with linear recording tracks can be also constructed by using a mechanism in which its probe and ferroelectric recording medium are moved linearly and relatively.

A dielectric recording / reproducing apparatus 10 is provided with: the probe 11 for applying an electric field with its tip portion facing to the ferroelectric material 17 of the ferroelectric recording medium 1; the return electrode 12b for returning the electric field applied form the probe 11; an inductor L placed between the probe 11 and the return electrode 12b; an oscillator 13 which oscillates at a resonance frequency determined from the inductor L and a capacitance (e.g. a capacitance Cs shown in FIG. 8) in a portion formed in the ferroelectric material just under the probe 11 and polarized correspondingly to recorded data; a switch 30 for switching an input signal when recording; a recording signal input device 31 for converting data to be recorded to generate a signal for recording; an alternating current (AC) signal generation device 32 for generating an alternating current (AC) signal which is referred to in coherent detection; a frequency modulation (FM) demodulator 33 for demodulating a FM modulation signal modulated by the capacitance corresponding to a nonlinear dielectric constant of the ferroelectric material just under the probe 11; a detector 34 for detecting data from the demodulated signal by using the coherent detection; and a tracking error detector 35 for detecting a tracking error signal from the demodulated signal.

The probe 11 is a conductive member, or an insulating member coated with a conductive film. The tip portion facing to the ferroelectric material 17 is hemispherical, having a predetermined radius. This radius is an important factor in determining the radius of the polarization formed in the ferroelectric material 17 correspondingly to record data, so it is extremely small, on the order of 10 nm. Data is recorded by applying a voltage between the probe 11 and the electrode 16 to form in the ferroelectric material 17 a domain polarized in a predetermined direction, while the recorded data is picked up on the basis of the capacitance corresponding to the polarization.

The return electrode 12b is an electrode for returning the high-frequency electric field generated by the oscillator 13 and applied to the ferroelectric material 17 from the probe 11, and is placed so as to surround the probe 11. More concretely, the return electrode 12b is provided with the slider 12 shown in FIG. 1 or the conductive film 12a shown in FIG. 2. In the SNDM method, the change of the capacitance corresponding to a nonlinear dielectric constant of the ferroelectric material is directly detected. To detect this change of the capacitance, it is preferable that a compact oscillating circuit is formed on or above one surface of the ferroelectric recording medium. In this example, the oscillating circuit (resonance circuit) is provided with the oscillator 13, the inductor L, the probe 11, and the return electrode 12b. In this oscillating circuit, the high-frequency signal flows from the probe 11 to the return electrode 12b thorough the ferroelectric material 17, as shown in FIG. 13. This route is a part of the oscillating circuit. It is preferable that this route is short in order to reduce noises due to a floating capacitance C0 and the like. The return electrode 12b is disposed so as to surround the probe 11 and the distance between the probe 11 and the return electrode 12b is very short. Therefore, the route that the high-frequency signal flows can be shortened, so that the noises can be reduced.

The inductor L is placed between the probe 11 and the return electrode 12b, and may be formed with a microstripline, for example. The resonance frequency of the resonance circuit containing the oscillator 13, the inductor L, the probe 11 and the return electrode 12b is determined by the inductor L and the capacitance Cs. The inductance of the inductor L is determined so that this resonance frequency, f = 1/2π√LCs, is about 1 GHz, for example. Incidentally, the capacitance factor to determine the resonance frequency f is not only the capacitance Cs but also the floating capacitance C0. However, since the recording / reproducing head of the present invention takes a structure for compact placement in view of the floating capacitance C0, the C0 can be assumed to be practically a constant when reproducing a signal by the SNDM. The resonance frequency f is simply expressed here as a function of the capacitance Cs and the inductor L because what changes the f in the signal reproduction is a capacitance change Δ Cs of the Cs. In fact, however, the capacitance includes the floating capacitance C0, and has implications of Cs + C0.

The change of the capacitance Cs corresponds to the nonlinear dielectric constant of the ferroelectric material 17 located just under the tip of the probe 11. The nonlinear dielectric constant of the ferroelectric material 17 located just under the tip of the probe 11 is determined according to the polarization direction of the ferroelectric material 17 at this part. In the state that data was recorded in the recording area 102 of the ferroelectric material 17, the polarization directions of the ferroelectric material 17 within the recording area 102 are changed and set according to the data (e.g. a bit sequence of the data). Therefore, the change of the capacitance Cs is changed according to the data recorded in the ferroelectric material 17.

The oscillator 13 is an oscillator which oscillates at the frequency determined from the inductor L and the capacitance Cs. The oscillation frequency varies, depending on the change of the capacitance Cs. Therefore, FM modulation is performed correspondingly to the change of the capacitance Cs determined by the polarization domain corresponding to the recorded data. By demodulating this FM modulation, it is possible to read the recorded data.

When the data recorded in the ferroelectric recording medium 1 is reproduced, the probe 11 touches the ferroelectric material 17, or faces to it with a small space. Corresponding to the radius of the tip portion of the probe 11, a polarization domain is defined in the ferroelectric material 17. If the high-frequency signal is applied to this probe 11, a high-frequency electric field is generated in the ferroelectric material 17, and the high-frequency signal returns to the return electrode 12b via the ferroelectric material 17. At this time, the capacitance Cs, which corresponds to a polarization P in the ferroelectric material 17 on or under the tip portion of the probe 11, participates in the resonance circuit made with the inductance L. By this, the oscillation frequency comes to depend on the capacitance Cs. By demodulating an oscillation signal which is FM-modulated on the basis of this capacitance Cs, a detection voltage shown in FIG. 10 is outputted, and the recorded data is reproduced. On the other hand, in data recording, the recording is performed by applying a voltage corresponding to the data between the probe 11 and the electrode 16 and thus determining the polarization direction of the ferroelectric material 17. The voltage applied for the data recording generates an electric field stronger than the coercive electric field of the ferroelectric material 17.

Incidentally, it is also possible to use a plurality of probes 11. In using a plurality of probes, record data and AC signals for coherent detection at the time of reproduction are applied between the respective probe and the electrode 16. In this case, it is preferable to provide a low cut filter in order to prevent the leakage of the signals into the oscillator 13.

The switch 30 is intended to switch the input signal when recording or reproducing. The position of the switch 30 is selected so as to input only the AC signal which is referred to in the detection when reproducing, and so as to input a signal about data and the AC signal when recording.

The recording signal input device 31 converts the data to be recorded in a recording format and adds the accompanying control information, to generate a recording signal. Processing about an error correction, processing of data compression and the like may be performed at this stage.

The AC signal generation device 32 generates an AC signal for coherent detection when recording (monitoring) / reproducing. If there are a plurality of probes 11, the AC signals with different frequencies are applied to the probes separately.

When recording, a recording signal is supplied from the recording signal input device 31 to the electrode 16. By an electric field between the probe 11 and the electrode 16, the polarization of a domain of the ferroelectric material 17 just under the probe 11 is determined. Then, the polarization direction is fixed and becomes record data. Incidentally, the AC signal of the AC signal generation device 32 is superimposed on the recording signal. This is used for monitoring the recorded data which is now recorded while the data recording is performed. The process of monitoring the recorded data is the same as the process of reproducing the recorded data. Namely, the oscillator 13 oscillates at the resonance frequency determined from the inductor L and the capacitance Cs, and the frequency is modulated by the capacitance Cs.

The FM demodulator 33 demodulates the oscillation frequency of the oscillator 13 modulated by the capacitance Cs, and reconstructs a wave form corresponding to the polarized state of a potion on which the probe 11 traces.

The detector 34 performs the coherent detection on the signal demodulated at the FM demodulator 33 with the AC signal from the AC signal generation device 32 as a reference signal and reproduces recorded data. Thus, the recording state can be monitored while the data recording is being performed.

The tracking error detector 35 detects a tracking error signal for controlling the apparatus from the signal demodulated at the FM demodulator 33. The detected tracking error signal is inputted to a tracking mechanism to control the apparatus.

As explained above, the dielectric recording / reproducing apparatus 10 is one example in which the dielectric recording / reproducing head and the tracking method associated with the present invention are applied, and it is possible to take other various structures, obviously.

## Claims

1. A dielectric recording / reproducing head (40a, 40b, 40c, 40d, 40e, 40f) for a dielectric recording medium (1), wherein the dielectric recording / reproducing head comprises:
a recording / reproducing electrode (11) for recording information or data in the dielectric recording medium or reproducing information or data recorded in the dielectric recording medium;
**characterized by**:
a slider (12) surrounding the recording / reproducing electrode and having a surface facing to the dielectric recording medium,
wherein the slider (12) has a function of a return electrode for returning an electric field applied from the recording / reproducing electrode to the dielectric recording medium (1); and
wherein a tip portion of the recording / reproducing electrode (11) is arranged so as not to project from the surface of the slider (12) facing the dielectric recording medium (1).

2. The dielectric recording / reproducing head (40a, 40b, 40c, 40d, 40e, 40f) according to claim 1, **characterized in that** the recording / reproducing electrode (11) has a cantilever shape.

3. The dielectric recording / reproducing head (40a, 40c, 40d, 40e, 40f) according to claim 1 or 2, **characterized in that** the slider (12) contains a conductive member.

4. The dielectric recording / reproducing head (40b) according to claim 1 or 2, **characterized in that**
the slider (12) contains an insulating member and has a conductive film (12a) on the surface of the slider facing to the dielectric recording medium (1), and
the conductive film has the function of the return electrode for returning the electric field applied from the recording / reproducing electrode to the dielectric recording medium.

5. The dielectric recording / reproducing head (40c) according to any one of claims 1 to 4, **characterized in that** an end portion of the slider (12) located against a direction in which the dielectric recording medium (1) relatively moves has a curved or sloping surface (41) with respect to a surface of the dielectric recording medium.

6. The dielectric recording / reproducing head (40a, 40b, 40c) according to any one of claims 1 to 5, **characterized in that** a first width of a tip portion of the recording / reproducing electrode (11) is larger than a width of a track (5) of the dielectric recording medium (1).

7. The dielectric recording / reproducing head(40a, 40b, 40c) according to claim 6, **characterized in that** the tip portion of the recording / reproducing electrode (11) has the first width in a longitudinal direction and a second width in a cross direction, and the first width is larger than the second width.

8. The dielectric recording / reproducing head (40a, 40b, 40c) according to claim 6, **characterized in that** the shape of the cross-section of the tip portion of the recording / reproducing electrode (11) is an ellipse or rectangle.

9. The dielectric recording / reproducing head (40d, 40e, 40f) according to any one of claims 1 to 5, **characterized in that** the dielectric recording / reproducing head further comprises a first tracking signal detection electrode (42, 43, 45) for detecting a tracking signal.

10. The dielectric recording / reproducing head (40d, 40e, 40f) according to claim 9, **characterized in that** the first tracking signal detection electrode (42, 43, 45) is placed in front of or behind the recording / reproducing electrode (11), deviating by half a track pitch in one direction along a track width direction.

11. The dielectric recording / reproducing head (40e, 40f) according to claim 10, **characterized in that** the dielectric recording / reproducing head further comprises a second tracking signal detection electrode (44, 46) for detecting a tracking signal, and the second tracking signal detection electrode is placed in front of or behind the recording / reproducing electrode (11), deviating by half a track pitch in the opposite direction to said one direction.

12. The dielectric recording / reproducing head (40a, 40b, 40c, 40d, 40e, 40f) according to any one of claims 1 to 11, **characterized in that** an insulator (14) is placed between the slider (12) and the recording / reproducing electrode (11).

13. The dielectric recording / reproducing head (40a, 40b, 40c, 40d, 40e, 40f) according to claim 12, **characterized in that** the recording / reproducing electrode (11) is held by the insulator (14) in the inside of the slider (12), so that the position of the recording / reproducing electrode is fixed.

14. The dielectric recording / reproducing head (40a, 40b, 40c, 40d, 40e, 40f) according to claim 13, **characterized in that** the insulator (14) is a molding member for holding the recording / reproducing electrode (11) in the inside of the slider (12).

## Patentansprüche

1. Dielektrischer Aufzeichnungs-/Wiedergabekopf (40a, 40b, 40c, 40d, 40e, 40f) für ein dielektrisches Aufzeichnungsmedium (1), wobei der dielektrische Aufzeichnungs-/Wiedergabekopf aufweist:
eine Aufzeichnungs-/Wiedergabeelektrode (11), um Information oder Daten in dem dielektrischen Aufzeichnungsmedium aufzuzeichnen oder Information oder Daten, welche in dem dielektrischen Aufzeichnungsmedium aufgezeichnet sind, wiederzugeben;
**gekennzeichnet durch**:
ein Gleitelement (12), welches die Aufzeichnungs-/Wiedergabeelektrode umgibt und
welches eine Oberfläche besitzt, welche dem dielektrischen Aufzeichnungsmedium gegenüberliegt,
wobei das Gleitelement (12) die Funktion einer Rücksendeelektrode besitzt, um ein elektrisches Feld, welches von der Aufzeichnungs-/Wiedergabeelektrode angelegt ist, an das dielektrische Aufzeichnungsmedium (1) zurückzusenden; und
wobei ein Spitzenteil der Aufzeichnungs-/Wiedergabeelektrode (11) so angeordnet ist, dass es nicht aus der Oberfläche des Gleitelementes (12) hervorragt, welches dem dielektrischen Aufzeichnungsmedium (1) gegenüberliegt.

2. Dielektrischer Aufzeichnungs-/Wiedergabekopf (40a, 40b, 40c, 40d, 40e, 40f) nach Anspruch 1, **dadurch gekennzeichnet, dass** die Aufzeichnungs-/Wiedergabeelektrode (11) die Form eines freitragenden Armes besitzt.

3. Dielektrischer Aufzeichnungs-/Wiedergabekopf (40a, 40c, 40d, 40e, 40f) nach Anspruch 1 oder 2, **dadurch gekennzeichnet, dass** das Gleitelement (12) ein leitfähiges Glied enthält.

4. Dielektrischer Aufzeichnungs-/Wiedergabekopf (40b) nach Anspruch 1 oder 2, **dadurch gekennzeichnet, dass**
das Gleitelement (12) ein Isolierglied enthält und einen leitfähigen Film (12a) auf der Oberfläche des Gleitelements besitzt, welche dem dielektrischen Aufzeichnungsmedium (1) gegenüberliegt, und
der leitfähige Film die Funktion der Rücksendeelektrode besitzt, um das elektrische Feld, welches von der Aufzeichnungs-/Wiedergabeelektrode an das dielektrische Aufzeichnungsmedium angelegt ist, zurückzusenden.

5. Dielektrischer Aufzeichnungs-/Wiedergabekopf (40c) nach einem der Ansprüche 1 bis 4, **dadurch gekennzeichnet, dass** ein Endteil des Gleitelements (12), welches entgegen einer Richtung platziert ist, in welcher sich das dielektrische Aufzeichnungsmedium (1) relativ bewegt, eine gekrümmte oder geneigte Oberfläche (41) in Bezug auf eine Oberfläche des dielektrischen Aufzeichnungsmediums besitzt.

6. Dielektrischer Aufzeichnungs-/Wiedergabekopf (40a, 40b, 40c) nach einem der Ansprüche 1 bis 5, **dadurch gekennzeichnet, dass** eine erste Breite eines Spitzenbereichs der Aufzeichnungs-/Wiedergabeelektrode (11) größer ist als eine Breite einer Spur (5) des dielektrischen Aufzeichnungsmediums (1).

7. Dielektrischer Aufzeichnungs-/Wiedergabekopf (40a, 40b, 40c) nach Anspruch 6, **dadurch gekennzeichnet, dass** das Spitzenteil der Aufzeichnungs/Wiedergabeelektrode (11) die erste Breite in einer longitudinalen Richtung besitzt und eine zweite Breite in einer Querschnittsrichtung besitzt und die erste Breite größer als die zweite Breite ist.

8. Dielektrischer Aufzeichnungs-/Wiedergabekopf (40a, 40b, 40c) nach Anspruch 6, **dadurch gekennzeichnet, dass** die Form des Querschnitts des Spitzenteils der Aufzeichnungs-/ Wiedergabeelektrode (11) eine Ellipse oder ein Rechteck ist.

9. Dielektrischer Aufzeichnungs-/Wiedergabekopf (40d, 40e, 40f) nach einem der Ansprüche 1 bis 5, **dadurch gekennzeichnet, dass** der dielektrische Aufzeichnungs-/Wiedergabekopf ferner eine erste Spurverfolgungs-Detektierelektrode (42, 43, 45) besitzt, um ein Spurverfolgungssignal zu detektieren.

10. Dielektrischer Aufzeichnungs-/Wiedergabekopf (40d, 40e, 40f) nach Anspruch 9, **dadurch gekennzeichnet, dass** die erste Spurverfolgungssignal-Detektierelektrode (42, 43, 45) vor oder hinter der Aufzeichnungs-/Wiedergabeelektrode (11) platziert ist, wobei diese um eine halbe Spurteilung in einer Richtung entlang einer Spurbreiterichtung abweicht.

11. Dielektrischer Aufzeichnungs-/Wiedergabekopf (40e, 40f) nach Anspruch 10, **dadurch gekennzeichnet, dass** der dielektrische Aufzeichnungs-/Wiedergabekopf ferner eine zweite Spurverfolgungssignal-Detektierelektrode (44, 46) aufweist, um ein Spurverfolgungssignal zu detektieren, und die zweite Spurverfolgungssignal-Detektierelektrode vor oder hinter der Aufzeichnungs-/Wiedergabeelektrode (11) platziert ist, wobei diese um eine halbe Spurteilung in entgegengesetzter Richtung zu der einen Richtung abweicht.

12. Dielektrischer Aufzeichnungs-/Wiedergabekopf (40a, 40b, 40c, 40d, 40e, 40f) nach einem der Ansprüche 1 bis 11, **dadurch gekennzeichnet, dass** ein Isolator (14) zwischen dem Gleitelement (12) und der Aufzeichnungs-/Wiedergabeelektrode (11) platziert ist.

13. Dielektrischer Aufzeichnungs-/Wiedergabekopf (40a, 40b, 40c, 40d, 40e, 40f) nach Anspruch 12, **dadurch gekennzeichnet, dass** die Aufzeichnungs-/Wiedergabeelektrode (11) durch den Isolator (14) auf der Innenseite des Gleitelements (12) gehalten ist, so dass die Position der Aufzeichnungs-/Wiedergabeelektrode fest ist.

14. Dielektrischer Aufzeichnungs-/Wiedergabekopf (40a, 40b, 40c, 40d, 40e, 40f) nach Anspruch 13, **dadurch gekennzeichnet, dass** der Isolator (14) ein gegossenes Glied ist, um die Aufzeichnungs-/Wiedergabeelektrode (11) auf der Innenseite des Gleitelements (12) zu halten.

## Revendications

1. Tête d'enregistrement / reproduction diélectrique (40a, 40b, 40c, 40d, 40e, 40f) pour un support d'enregistrement diélectrique (1), dans laquelle la tête d'enregistrement / reproduction diélectrique comprend :
une électrode d'enregistrement / reproduction (11) pour enregistrer des informations ou des données sur le support d'enregistrement diélectrique ou pour reproduire des informations ou des données enregistrées sur le support d'enregistrement diélectrique ;
**caractérisée par** :
un coulisseau (12) entourant l'électrode d'enregistrement / reproduction et ayant une surface faisant face au support d'enregistrement diélectrique,
dans laquelle le coulisseau (12) a une fonction d'électrode de retour pour renvoyer un champ électrique appliqué de l'électrode d'enregistrement / reproduction au support d'enregistrement diélectrique (1) ; et
dans laquelle une partie de bout de l'électrode d'enregistrement / reproduction (11) est agencée afin de ne pas dépasser de la surface du coulisseau (12) faisant face au support d'enregistrement diélectrique (1).

2. Tête d'enregistrement / reproduction diélectrique (40a, 40b, 40c, 40d, 40e, 40f) selon la revendication 1, **caractérisée en ce que** l'électrode d'enregistrement / reproduction (11) a une forme de cantilever.

3. Tête d'enregistrement / reproduction diélectrique (40a, 40c, 40d, 40e, 40f) selon la revendication 1 ou 2, **caractérisée en ce que** le coulisseau (12) contient un élément conducteur.

4. Tête d'enregistrement / reproduction diélectrique (40b) selon la revendication 1 ou 2, **caractérisée en ce que :**
le coulisseau (12) contient un élément isolant et comporte un film conducteur (12a) sur la surface du coulisseau faisant face au support d'enregistrement diélectrique (1), et
le film conducteur a la fonction d'une électrode de retour pour renvoyer le champ électrique appliqué de l'électrode d'enregistrement / reproduction au support d'enregistrement diélectrique.

5. Tête d'enregistrement / reproduction diélectrique (40c) selon l'une quelconque des revendications 1 à 4, **caractérisée en ce qu'**une partie d'extrémité du coulisseau (12) située contre une direction dans laquelle le support d'enregistrement diélectrique (1) se déplace de manière relative possède une surface courbée ou inclinée (41) par rapport à une surface du support d'enregistrement diélectrique.

6. Tête d'enregistrement / reproduction diélectrique (40a, 40b, 40c) selon l'une quelconque des revendications 1 à 5, **caractérisée en ce qu'**une première largeur d'une partie de bout de l'électrode d'enregistrement / reproduction (11) est plus grande qu'une largeur d'une piste (5) du support d'enregistrement diélectrique (1).

7. Tête d'enregistrement / reproduction diélectrique (40a, 40b, 40c) selon la revendication 6, **caractérisée en ce que** la partie de bout de l'électrode d'enregistrement / reproduction (11) a la première largeur dans une direction longitudinale et une seconde largeur dans une direction transversale, et la première largeur est plus grande que la seconde largeur.

8. Tête d'enregistrement / reproduction diélectrique (40a, 40b, 40c) selon la revendication 6, **caractérisée en ce que** la forme de la section transversale de la partie de bout de l'électrode d'enregistrement / reproduction (11) est une ellipse ou un rectangle.

9. Tête d'enregistrement / reproduction diélectrique (40d, 40e, 40f) selon l'une quelconque des revendications 1 à 5, **caractérisée en ce que** la tête d'enregistrement / reproduction diélectrique comprend en outre une première électrode de détection de signal de suivi de piste (42, 43, 45) pour détecter un signal de suivi de piste.

10. Tête d'enregistrement / reproduction diélectrique (40d, 40e, 40f) selon la revendication 9, **caractérisée en ce que** la première électrode de détection de signal de suivi de piste (42, 43, 45) est placée devant ou derrière l'électrode d'enregistrement / reproduction (11), s'écartant d'un intervalle d'une demi-piste dans un sens particulier dans la direction de la largeur de la piste.

11. Tête d'enregistrement / reproduction diélectrique (40e, 40f) selon la revendication 10, **caractérisée en ce que** la tête d'enregistrement / reproduction diélectrique comprend en outre une seconde électrode de détection de signal de suivi de piste (44, 46) pour détecter un signal de suivi de piste, et la seconde électrode de détection de signal de suivi de piste est placée devant ou derrière l'électrode d'enregistrement / reproduction (11), s'écartant d'un intervalle d'une demi-piste dans le sens opposé audit sens particulier.

12. Tête d'enregistrement / reproduction diélectrique (40a, 40b, 40c, 40d, 40e, 40f) selon l'une quelconque des revendications 1 à 11, **caractérisée en ce qu'**une pièce isolante (14) est placée entre le coulisseau (12) et l'électrode d'enregistrement / reproduction (11).

13. Tête d'enregistrement / reproduction diélectrique (40a, 40b, 40c, 40d, 40e, 40f) selon la revendication 12, **caractérisée en ce que** l'électrode d'enregistrement / reproduction (11) est maintenue par la pièce isolante (14) dans l'intérieur du coulisseau (12), de sorte que la position de l'électrode d'enregistrement / reproduction est fixe.

14. Tête d'enregistrement / reproduction diélectrique (40a, 40b, 40c, 40d, 40e, 40f) selon la revendication 13, **caractérisée en ce que** la pièce isolante (14) est un élément moulé pour maintenir l'électrode d'enregistrement / reproduction (11) dans l'intérieur du coulisseau (12).
